Europäisches Patentamt

European Patent Office

Office européen des brevets

(11) Publication number: **0 493 814 A2**

# EUROPEAN PATENT APPLICATION

(21) Application number: **91122309.7**

(22) Date of filing: **27.12.91**

(51) Int. Cl.⁵: **C08L 55/02**

(30) Priority: **29.12.90 JP 417667/90**

(43) Date of publication of application:
**08.07.92 Bulletin 92/28**

(84) Designated Contracting States:
**DE FR GB**

(71) Applicant: **NIPPON PETROCHEMICALS COMPANY, LIMITED**
**3-1, Uchisaiwaicho 1-chome Chiyoda-ku Tokyo(JP)**

(72) Inventor: **Inoue, Toshio**
**618-1, Mizonokuchi, Takatsu-ku Kawasa-shi, Kanagawa-ken(JP)**

(74) Representative: **Strehl, Schübel-Hopf, Groening**
**Maximilianstrasse 54 Postfach 22 14 55 W-8000 München 22(DE)**

(54) **ABS-Type thermoplastic resin composition and method for producing the same.**

(57) An ABS-type thermoplastic resin composition prepared by subjecting a thermoplastic resin containing a copolymer to dynamic heat treatment in the presence of a carbon radical inducing agent, wherein the above thermoplastic resin containing a copolymer is prepared by graft polymerizing a polymer containing one or more of diene monomers, multivinyl compounds and multiallyl compounds with at least one vinyl monomer selected from the group consisting of aromatic vinyl monomers, methacrylic ester monomers and vinyl cyanide monomers. The resin composition of the invention excels in tensile strength, flexural modulus, impact resistance and moldability.

EP 0 493 814 A2

BACKGROUND OF THE INVENTION

(1) Field of the Invention

This invention relates to an ABS-type thermoplastic resin composition and a method for producing the same. The thermoplastic resin composition of the invention has various excellent properties and it is prepared by subjecting an ABS-type thermoplastic resin to dynamic heat treatment in the presence of a carbon radical inducing agent.

(2) Description of Prior Art

Although the thermoplastic copolymer resin which is prepared by graft-polymerizing a polymer containing one or more of diene monomers such as an acrylonitrile-butadiene-styrene copolymer and an acrylonitrile-(triallylisocyanurate-n-butylmethacrylate)-styrene copolymer, multivinyl compounds, multiallyl compounds with at least one vinyl monomer selected from aromatic vinyl monomers, methacrylic ester monomers and vinyl cyanate monomers, excels in the balance of its rigidity, workability and impact resistance. However, there are remained problems in thermal resistance and solvent resistance in some uses. In order to eliminate these disadvantages and to enhance the above advantages, various measures have been taken.

A first measure is to blend another thermoplastic resin which excels in thermal resistance and solvent resistance. For example, "a blended material of acrylonitrile-butadiene-styrene copolymer and polybutylene terephthalate resin" is disclosed in Japanese Patent Publication Nos. Sho 51-255261 and Sho 54-34381. "A blended material of acrylonitrile-butadiene-styrene copolymer and polyallylate" is disclosed in Japanese Laid-Open Patent Publication No. Sho 48-25053 and "A blended material of acrylonitrile-butadiene-styrene copolymer, polyallylate and polycarbonate" is disclosed in Japanese Laid-Open Patent Publication No. Sho 53-71155. The effect of improvement can be expected to some extent in these method, however, satisfactory mechanical characteristics cannot be obtained due to the simple blending and to the limitation in compatibility of resins.

The addition of compatibility improving agents is proposed in a second measure in order to enhance the above first measure. As disclosed in Japanese Patent Publication Nos. Sho 61-29985 and Sho 62-9136, "Method for adding hydrogenated block copolymer having a specific structure", some effect can be expected by improving the mechanism of phase separation. In order to produce a sufficient improving effect, however, it is necessary in most cases to add a considerable amount of compatibility improving agent. In such a case, the influence of the added compatibility improving agent in the final product cannot be disregarded and undesirable results are caused to occur in mechanical characteristics. Furthermore, it is one of bars that the compatibility improving agents are generally expensive.

A third measure is to improve the compatibility with other resins by causing a chemical reaction to occur in a blended materials such as those obtained in the first measure. For this purpose, the improvement with using organic peroxides or azo compounds was tried in various blended materials, however, this method cannot always be applied to all resins because the resin which is cross-linked by an organic peroxide losses its thermoplasticity by the cross-linking and the addition of a resin which is free from cross-linking is required (e.g. Japanese Laid-Open Patent Publication No. Sho 63-30547). For the above reason, it has never been tried to enhance the characteristics of "the thermoplastic resin containing one or more diene monomers and two or more vinyl monomers including aromatic vinyl monomer which excels in rigidity, workability and impact resistance", which was intended in the present invention.

By utilizing the third measure, it is possible to modify a resin composition by adding some unsaturated compound, however, any effect has not bee produced for the similar reason. That is, a resin composition which is prepared by melt kneading a maleimide compound having unsaturated bonds into various thermoplastic resins is exemplified in Japanese Patent Publication No. Sho 56-18613. However, there has never been tried positively in practice to add the compound under the formation of radicals.

The inventors of the present application have proposed a method to modify a thermoplastic resin using a carbon radical inducing agent which agent hardly causes side reaction and is different from the conventional vigorous radical forming agents such as organic peroxides (Japanese Laid-Open Patent Publication No. Hei 2-49065, corres. to U.S. Patent Application Serial No. 290,362; Japanese Laid-Open Patent Publication No. Hei 3-28214, corres. to U.S. Patent Application Serial No. 540,939; and Japanese Laid-Open Patent Publication No. Hei 3-202639, corres. to U.S. Patent Application Serial No. 699,742).

BRIEF SUMMARY OF THE INVENTION

2

In view of the above-described state of prior art, the object of the present invention is to provide a method for improving a copolymer which is prepared by graft polymerizing a polymer containing one or more of diene monomers, multivinyl compounds and multiallyl compounds with a vinyl monomer containing at least one member selected from the group consisting of aromatic vinyl monomers, methacrylic ester monomers and vinyl cyanide monomers without impairing inherent advantages in rigidity, impact resistance and workability, or a method for improving its characteristics by combining it with different kind of resins.

The inventors of the present application had carried out extensive investigations and, as a result, they have found out a thermoplastic resin composition having excellent properties, which resin composition is prepared by subjecting a thermoplastic resin containing a copolymer to dynamic heat treatment in the presence of a carbon radical inducing agent, wherein the thermoplastic resin containing a copolymer is obtained by graft polymerizing a polymer containing one or more of diene monomers, multivinyl compounds and multiallyl compounds with at least a vinyl monomer selected from the group consisting of aromatic vinyl monomers, methacrylic ester monomers and vinyl cyanide monomers, thereby accomplishing the present invention.

DETAILED DESCRIPTION OF THE INVENTION

The present invention will be described in more detail in the following.

The "diene monomers" used in the present invention are exemplified by straight chain dienes such as butadiene, and their derivatives in which any one of hydrogen atom of the straight chain diene can be replaced by an alkyl group, cyano group, nitro group, carboxyl group or its ester group, or halogen atom; alicyclic dienes such as cyclopentadiene, ethylidene norbornene and their derivatives in which any one of hydrogen atom of the alicyclic diene is replaced by an alkyl group, cyano group, nitro group, carboxyl group or its ester group, or halogen atom. Among them, butadiene and ethylidene norbornene are desirable.

The "multiallyl compounds" and "multivinyl compounds" are exemplified by triallylisocyanurate, triallylcyanurate, divinylbenzene, triacrylformal, and ethylene glycol dimethacrylate. They have carbon-carbon double bonds and their reactivity is high. In order to avoid excess cross-linking, they are used in a compounding ratio of less than 10 wt.% and used together with a methacrylic ester monomer. The methacrylic ester monomers used together are exemplified by n-butylmethacrylate, ethyl methacrylate and propyl methacrylate having an alkyl group with 1 to 13 carbon atoms. These methacrylic ester monomers are used singly or in combination of two or more. A typical combination is triallylisocyanurate and n-butylmethacrylate.

"Aromatic vinyl monomers" are exemplified by styrene, $\alpha$-methylstyrene, vinyltoluene, vinylxylene, trimethylstyrene, halogenated styrene (e.g. styrene bromide). Among them, the styrene is preferable.

"Methacrylic ester monomers" are exemplified by methyl methacrylate, n-butylmethacrylate, t-butylmethacrylate, ethyl methacrylate, and propyl methacrylate, which have an alkyl group with 1 to 13 carbon atoms. They can be used singly or in combination of two or more. Among them, methyl methacrylate is preferable.

"vinyl cyanide monomers" are exemplified by acrylonitrile and methacrylonitrile, and the former acrylonitrile is desirable.

In the present invention, "vinyl monomers" can also be used besides the above compounds, which are exemplified by unsaturated carboxylic acid monomers (e.g. maleic anhydride).

In the ordinary designing of ABS-type resins, the "impact resistance" is realized by diene monomer polymerizing portions, the rigidity is realized by aromatic vinyl monomer polymerizing portions and other desirable characteristics are added by another kind of vinyl monomer polymerizing portions.

However, even though the impact resistance and rigidity can be improved by the above measures, material having all the desired characteristics cannot always be obtained because the polymerization reaction proceeds only in the vinyl monomers. In such a case, the desired properties must be realized by taking some separate measure.

Among these resins, desirable one or combinations are at least one member selected from the group consisting of ABS resin (acrylonitrile-butadiene-styrene copolymer), AS resin (acrylonitrile-styrene copolymer), AAS resin (acrylonitrile-(triallylisocyanurate-n-butylmethacrylate)-styrene copolymer), MBS resin (methacrylic ester-butadiene-styrene copolymer), AES resin (acrylonitrile-ethylidenenorbornene-styrene copolymer), and ACS resin (acrylonitrile-chlorinated polyethylene-styrene copolymer), or copolymers prepared by replacing a part of the above resins by another monomer, or their modified products.

These copolymers of thermoplastic resins are prepared by conventional methods of solution polymerization, block polymerization, suspension polymerization, or emulsion polymerization, or combinations of them.

In the present invention, the resin composition can also be obtained by melt kneading with adding another thermoplastic resin to the copolymer which is obtained by graft polymerizing a polymer containing one or more of diene monomers, multivinyl compounds and multiallyl compounds with at least one vinyl monomer selected from the group consisting of aromatic vinyl monomers, methacrylic ester monomers and vinyl cyanide monomers. There is no limitation with regard to the resin to be added, however, it is desirable to add a resin which compensates any defective property in the copolymer so as to improve the commercial value of the obtained resin material.

Exemplified as desirable combinations are ABS/polybutylene terephthalate resin (hereinafter referred to as "PBT"), ABS/polyethylene terephthalate resin (hereinafter referred to as "PET"), ABS/polycarbonate resin (hereinafter referred to as "PC"), ABS/polyamide 6 resin (hereinafter referred to as "PA6"), ABS/polyamide 66 resin (hereinafter referred to as "PA66"), ABS/polypropylene resin (hereinafter referred to as "PP"), ABS/polyvinyl chloride resin (hereinafter referred to as "PVC"), ABS/polysulfone resin (hereinafter referred to as "PSF"), ABS/styrene-butadiene-styrene block copolymer (hereinafter referred to as "SBS"), ABS/ethylene-propylene-diene random copolymer (hereinafter referred to as "EPDM"), AAS/PVC, AES/PBT, ABS/PBT, and PC/PBT/ABS. Of course, three or more resins can be used together in combination and they can contain any known compatibility improving agent.

The compatibility improving agent is generally a polymer having a molecular weight of more than 1000 and made from two or more kinds of monomers. The compatibility improving agent contains at least a constituent monomer which is copolymerized or graft polymerized or grafted in the presence of a radical forming agent such as peroxide compound and has affinity for a constituent monomer of a thermoplastic resin to be mixed (e.g the styrene in ABS resin, and the bisphenol A in polycarbonate and the styrene in hydrogenated styrene-butadiene-styrene block copolymer). Or the compatibility improving agent causes a chemical reaction during the melt kneading with a thermoplastic resin (e.g. the amide group in a polyamide resin and the maleic anhydride in maleic modified polypropylene, or the carboxyl group in a polyester resin and the epoxy group in an (ethylene-glycidyl methacrylate copolymer)-(styrene) graft copolymer). These compatibility improving agents give a desirable dispersed condition with reducing the interfacial tension by being disposed on the interfaces of mixed different thermoplastic resins during melt kneading (reactants include grafted product after reaction). Various kinds of agents are synthesized and are commercially available, which are exemplified by styrene-butadiene-styrene block copolymer, the hydrogenated product of this copolymer (especially effective when polycarbonate resin or polyester resin is contained), maleic modified or acrylic modified product of them, maleic modified or acrylic modified polyolefin (especially effective when polyamide is contained), ethylene-glycidyl methacrylate copolymer, and ethylene-ethylacrylate copolymer (especially effective when polycarbonate resin or polyester resin is contained).

Besides the above resins, there are usable compatibility improving agents such as polystyrene containing oxazoline and polystyrene containing a peroxide monomer to which an arbitrary thermoplastic resin is grafted.

A compound having carbon-carbon unsaturated bonds can coexist so as to improve the compatibility by the addition reaction product. For example, there are ABS/PA 6/maleic anhydride and ABS/PBT/glycidyl methacrylate.

In the following, the mechanism to produce the effect of the present invention with the composition containing "diene monomer" will be described. With regard to the copolymers containing "multiallyl compound" and "multivinyl compound", the mechanism is considered to be similar.

The ability of a carbon radical used in the invention to abstract a hydrogen atom from an ordinary carbon-hydrogen bond is weak as compared with that of an oxygen radical which is formed by the cleavage of an organic peroxide. That is, because the hydrogen abstraction is mainly occurs in allyl positions, the radical reaction proceeds around allyl positions of the diene monomer polymerizing portions in a composition.

Accordingly, the following improving effects are brought about in the composition of the present invention and materials having desired properties can be prepared:

(1) The improvement in impact resistance, thermal resistance and solvent resistance owing to the partial cross-linking of diene monomer polymerizing portion of the copolymer resin.

(2) The formation of graft polymer by the radical association between the diene monomer polymerizing portion of copolymer and a thermoplastic resin of different kind, and accompanying improvement in compatibility.

(3) The formation of graft polymer by the radical association between different thermoplastic resins, and accompanying improvement in compatibility.

The present invention is not limited to the improvements brought about by the above reaction.

Furthermore, the workability and mechanical properties are not impaired seriously because the chemi-

4

cal structure is not largely changed except the polymerizing portion of diene monomer in the thermoplastic resin.

In the practical working of the present invention, the effect of the invention is produced by the fact that a compound having a carbon-carbon unsaturated bond joins itself mainly to a coexisting thermoplastic resin, a compound having two or more carbon-carbon unsaturated bonds joins itself mainly to a coexisting thermoplastic resin, and the thermoplastic resin joins itself to or cross-links with another coexisting thermoplastic resin.

The cross-linked portion of the resin has a function as a nucleating agent to improve the rate of crystallization. Therefore, it is quite effective in improving polyester resin which has problems in the rate of crystallization and impact resistance.

In other words, because the rate of crystallization in the injection molding of crystalline thermoplastic polyester resin is generally small, the molecule orientation is accelerated by (1) adding seeds (nucleating agent) so as to promote the crystallization and by (2) adding plasticizing material in order to activate the motion among polyester molecules (to lower the glass transition temperature). However, there are remaining problems caused by worse dispersion of these additives in the unevenness of composition and the occurrence of teh bleeding and the lowering of molecular weight of PET.

Meanwhile, as the measures to improve the impact strength, there are known (1) the use of high molecular weight PET, (2) the modification of PET by copolymerization with a soft component, and (3) the blending with soft and elastic material. However, the thermal resistance is often lost in such a case. The measure to solve simultaneously the above two points of the rate of crystallization and the impact resistance, has not yet been known.

The carbon radical inducing agent used in the present invention means a combination of compounds which react mutually with a specific compound and both become carbon radicals (hereinafter referred to as "carbon radical inducing agent (I)") and a compound which forms carbon radicals spontaneously by thermal decomposition (hereinafter referred to as "carbon radical inducing agent (II)").

There are two kinds of the carbon radical inducing agents (I). These will be described in the following.

One carbon radical inducing agent (I) is a combination of compounds which form charge-transfer complexes. For example, a hydrogen atom is transferred from one compound to another compound in the complexes to yield radicals on both the unsaturated bonds.

As the combination of compounds used for this purpose are those having different e-values of electron densities in unsaturated bonds in both compounds and various combinations are known as alternative copolymers. Among them, it is desirable to use the compounds having larger $e$-values in view of the reactivity after the formation of radicals. The compounds are exemplified by maleimide, N-substituted maleimide (e.g. N-methylmaleimide, N-ethylmaleimide, N-ter-butylmaleimide, N-cyclohexylmaleimide, N-decylmaleimide, N-phenylmaleimide, N-phenyl-$\alpha$-methylmaleimide, N-phenyl-$\alpha,\beta$-dimethylmaleimide, N-phenyl-$\alpha$-ethylmaleimide, N-phenyl-$\alpha,\beta$-diethylmaleimide, N-(4-carboxyphenyl)maleimide, N-(4-hydroxyphenyl)maleimide, and N-($\alpha$-chlorophenyl)maleimide), and bismaleimide (e.g. N,N'-m-phenylene bismaleimide, N,N'-p-phenylene bismaleimide and N,N'-ethylene bismaleimide), $\alpha,\beta$-unsaturated carboxylic acid and its anhydride (e.g. acrylic acid and methacrylic acid or their esters, and maleic anhydride or its derivative).

As the compounds which form charge-transfer complexes with these compounds are exemplified by 6-ethoxy-2,2,4-trimethyl-1,2-dihydroquinoline, poly(2,2,4-trimethyl-1,2-dihydroquinoline), styrene, $\alpha$-methylstyrene, trans-stilbene, vinylferrocene, 4-vinylpyridine, 2-isopropenylnaphthalene, N-vinylcarbazole, N-vinylindole, indole, benzofuran, furan, dihydrofuran, 3,4-dihydro-2-pyran, cyclic vinyl ethers such as 4H-chromene, furan derivatives such as furfuryl acetate, alkyl vinyl ether such as n-octadecylvinyl ether and ethylvinyl ether, enol ether or enol ester of carbonyl compounds of ketone, ester, lactone, aldehyde, amide and lactam such as ketene acetal, isopropenyl acetate, and 1-amino-1-methoxyethylene, allyl acetate, vinyl acetate, 1,2-dimethoxyethylene, p-dioxene, 2-chloroethylvinyl ether, 2-phenylvinylalkyl ether, 2-phenylalkenyl ether, heptafluoroisopropylalkenyl ether, ethylvinyl sulfide, styrylalkenyl thioether, p-oxadiene, cyclopentene, cyclohexene, divinyl ether, butadiene, isoprene, 1,3-pentadiene, 1,4-pentadiene, and dimethyldivinyl silane.

In the present invention, because it is desirable that the above complexes do not form a copolymer but they dissociate as radicals, the reactivity of both radicals (which can be judged by Q-values of monomers) are much different. Among them, the combinations of dihydroquinoline derivatives such as 6-ethoxy-2,2,4-trimethyl-1,2-dihydroquinoline and poly(2,2,4-trimethyl-1,2-dihydroquinoline) or their polymers with the above maleimide compounds or unsaturated carboxylic acid anhydride, are desirable. In other words, the former is "an unsaturated compound having a relatively large $e$-value and a small Q-value" and the latter is "an unsaturated compound having a relatively small $e$-value and a large Q-value", so that the balance of $e$-

values and Q-values is good. Furthermore, both compounds exert high activity for the reason that they have a structure in which tension is applied in the unsaturated bond portions. Judging from the effect of the present invention, when a derivative of dihydroquinoline or its polymer is added singly, it is considered that the compound forms a charge-transfer complex directly with the unsaturated bond portion of a thermoplastic resin. Furthermore, the compound is desirable also in view of the fact that it is easily available and the unreacted remainder portion acts as an age resistor.

Another group of the carbon radical inducing agents (I) is the combinations of hydrogen donating compounds and hydrogen accepting compounds. Hydrogen atoms are transferred from the former ones to the latter ones to form radicals. The hydrogen donating compound itself after the transfer of hydrogen radical can be in a stable state by resonance. It is defined that, when a certain quantity of a compound is reacted with a hydrogen acceptor of anthracene without any catalyst at 350°C, 50 atm. (under $N_2$) for 30 minutes, the transfer of hydrogen from the compound to the anthracene is at least 0.1-hydrogen atom/anthracene molecule. Exemplified as such compounds are 1,2-dihydrobenzene, 1,2-dihydronaphthalene, 9,10-dihydronaphthalene, octahydrophenanthrene, octahydroanthracene, tetraline, indene, tetrahydrofuran, 2,3-dihydrobenzofuran and fluorene. Among these compounds, octahydrophenanthrene, octahydroanthracene, tetralin, indene and fluorene are preferable for the reason that they are easily available, the final product is not colored, and they have no functional group which decomposes the amide groups and ester bonds in a thermoplastic resin.

When the hydrogen accepting compound receives a hydrogen radical and it become a radical, the resonance stability is low, so that a compound generally used as a cross-linking agent for rubber with peroxide is employed. More particularly, they are exemplified by higher esters of methacrylic acid such as trimethylolpropane trimethacrylate and ethylene dimethacrylate, and polyfunctional vinyl monomers such as divinylbenzene, triallylcyanurate and diallylphthalate. In the present invention, maleimide compounds (e.g. N,N'-m-phenylene bismaleimide and N,N'-ethylene bismaleimide) and anhydrides of unsaturated carboxylic acids (e.g. maleic anhydride and its derivatives, ethylene glycol dimethacrylate) are desirable.

The carbon radical inducing agents (II) are exemplified by 1,1,2,2-tetramethyl-1,2-diphenylethane (generally named as "dicumyl").

In the use of the carbon radical inducing agent (I), the above effect can be produced efficiently because the radicals are directly formed in the added and/or crosslinked compound and thermoplastic resins.

Meanwhile, in the case of the carbon radical inducing agent (II), the efficiency is not good because the aimed reaction of the present invention is started by the action of formed carbon radicals to the unsaturated bonds of other compounds. Besides this, side reaction such as the change of the characteristics of thermoplastic resin is caused to occur. However, an effective composition can be prepared because this side reaction is very small as compared with that of the radical of organic peroxide.

As other method for inducing carbon radicals, the addition of a bismaleimide compound and simultaneous use of an activating agent are effective. The activating agents are exemplified by benzothiazole compounds and benzothiazolyl sulfonamide compounds. The activity of these compounds is generally low as compared with that of the above carbon radical inducing agents and the field of use is limited in view of odor and coloring due to the formation of sulfur radical.

These inducing agents can be used singly or in combination of two or more. Furthermore, a trace quantity of an organic peroxide or an azo compound can be used together within the object of the present invention.

The addition quantity of carbon radical inducing agent is arbitrarily selected. A proper quantity can be determined according to the composition of thermoplastic resin components, the kind of carbon radical inducing agent, and the apparatus and conditions of melt kneading. When a carbon radical inducing agent is added too much, the composition is colored and cost is raised. Therefore, a proper quantity of addition of the carbon radical inducing agent must be selected in view of the balance of them.

The practical addition quantity of the inducing agent is generally in the range of 0.01 to 5 weight parts, preferably 0.05 to 3 weight parts, to 100 weight parts of the whole thermoplastic resin. It is desirable that used materials are sufficiently dispersed together by melt kneading before the start of the formation of carbon radical.

In the present invention, the thermoplastic resin mixture of two or more kinds of components obtained through the above-described process is subjected to dynamic heat treatment in the presence of a carbon radical inducing agent to prepare a resin composition. A mixing device of a high shearing rate is preferably used in the dynamic heat treatment to facilitate the formation of radicals in the mixture.

In order to attain the effect of dynamic heat treatment as the object of the present invention, it is necessary that the coefficient of shrinkage of an injection molded article of heat treated composition is larger than that of an injection molded article of a composition which is melt kneaded without adding any carbon radical inducing agent. Or it is necessary that the boiling xylene insoluble matter of the former composition is increased. As described above, the increase in these values indicates the effects of the present invention such as:

(1) the cross-linking of the thermoplastic resin comprising one or more of diene monomers and two kinds or more of vinyl monomers including aromatic vinyl monomer, and

(2) the formation of graft polymer by the radical association between the above resin and coexisting thermoplastic resin.

Several kinds of improvement effects are generally large when the coefficient of shrinkage of injection molded article and/or the boiling xylene insoluble matter are large. However, the above does not apply to the case in which the main purpose is to add unsaturated compounds.

The apparatus used for the melt kneading and dynamic heat treatment are exemplified by known devices such as open-type mixing roll, closed Banbury mixer, extruder, kneader, and twin-screw extruder. The conditions for working the present invention with the above-mentioned composition are preferably in the ranges of 150 to 350°C in kneading temperature and 20 seconds to 20 minutes in heat treating time.

It is possible to add several additives to the composition of the present invention, which additives are exemplified by dyes, pigments, organic fillers, inorganic fillers, metallic fillers, softening agents (mineral oils and synthetic oils), flame retardants, crystallization accelerators, heat and light stabilizers, and other additives conventionally used for plastics.

The resin composition according to the present invention has various excellent properties of moldability, mechanical properties, chemical properties, electrical properties, thermal resistance, weather resistance, and adaptability to finish coating. Therefore, various kinds of plastics articles can be produced by the presently employed thermoplastic resin formation technique such as injection molding, blow molding, extrusion molding and press forming. The products made of the resin composition of the present invention are suitably used in a filed in which the high performance of ABS-type resin is required, for example, electric and electronic parts such as connecters, coil bobbins and couplers; office machinery such as machine housings and key boards; automobile parts such as door handles, instrument panels, bumpers and outer panels; and other containers for foods and industrial uses.

The present invention will be described in more detail with reference to examples. It should be noted however that the present invention is by no means limited by these examples.

In the first place, the preparation of compositions, the conditions of injection molding and the methods of testing and measuring are described.

* Preparation of Composition

(1) A thermoplastic copolymer resin obtained by graft polymerizing a polymer containing one or more of diene monomers, multivinyl compounds and multiallyl compounds with at least one vinyl monomer selected from the group consisting of aromatic vinyl monomers, methacrylic ester monomers and vinyl cyanide monomers (hereinafter referred to as "Component A") and a thermoplastic resin (hereinafter referred to as "Component B") were formulated in specific ratios and they were mixed in a Henschel mixer. Provided that, when the present invention was worked with only one kind of the Component A, the steps (1) and (2) were omitted.

(2) The mixture obtained in the above step was subjected to melt kneading with a continuous twin-screw extruder (30 mmⵁ made by Plastic Kogaku Kenkyusho K.K.).

(3) A carbon radical inducing agent (hereinafter referred to as "Component a") was added to the above obtained mixture and they were mixed with a Henschel mixer. The quantity of Component a was the value added to 100 weight parts of Component A plus Component B (wphr).

(4) The melt kneading of the above obtained mixture was carried out with the twin-screw extruder used in the above step (2). The treating conditions were adjusted by measuring and controlling the temperature of the composition at the outlet of the extruder and the retention time in the extruder. The heat treatment conditions of the temperature of the composition and the retention time will be indicated later. By the way, the temperature of a composition was measured with a resin thermometer attached to the extruder used.

* Injection Molding Conditions

```
Injection molding machine:      IS-90B

                                (made by Toshiba Machine Co., Ltd.)

Injection pressure:             800 to 1,000 kg/cm²

Barrel temperature:             230 to 300°C

Mold temperature:               40 to 110°C
```

* Testing and Measuring Methods

Unless specifically noted, annealed injection molded plates were used as test pieces. Testing and measuring methods are shown in the following.

| | |
|---|---|
| Tensile yield strength and tensile strength: | ASTM D 630 |
| Flexural modulus: | ASTM D 790 |
| Izod impact strength: | ASTM D 256 |

Coefficient of shrinkage in molding:

Dumb-bell type test specimens for use in the test of tensile yield strength (ASTM D 630) were used. The value was obtained from the size after shrinkage and the size of metal mold in the direction along the flow of material in injection molding.

Mold releasing property:

This was tested as a rough estimation of injection molding characteristics. The easiness in the mold releasing was evaluated in three grades in connection with the molded articles prepared by constant injection cycle time and mold temperature.

○      Easily released by ejector pins
△      Some molded articles were remained in the mold, which had to be taken off manually.
X      Most of molded articles remained in the mold, which had to be taken off manually and were deformed by the hand operation.

The carbon radical inducing agents used in examples were as follows:
al:    N,N'-m-phenylene bismaleimide
a2:    Poly(2,2,4-trimethyl-1,2-dihydroquinoline)
a3:    6-Ethoxy-2,2,4-trimethyl-1,2-dihydroquinoline
a4:    Cyclohexene
a5:    9,10-Dihydrophenanthrene
a6:    Indene
a7:    Dicumyl

Examples 1 to 3, Comparative Example 1

Experiment was done using Component A of acrylonitrile-butadiene-styrene copolymer (trademark: JSR ABS 10 made by Japan Synthetic Rubber Corp., hereinafter referred to as "A1"), only.

The temperature of the compositions at the outlet of extruder was 250°C and the retention time in the extruder was 50 seconds.

The quantities of components are shown in Table 1 and the properties of the obtained compositions are shown in Table 2. Those of subsequent Examples and Comparative Examples are also shown in the same tables.

Example 4, Comparative Example 2

Component A of acrylonitrile-butadiene-styrene copolymer (trademark: JSR ABS10 made by Japan Synthetic Rubber Corp., hereinafter referred to as "A2") and Component B of polyethylene terephthalate (trademark: Toray PBT 1401 made by Toray Industries, Inc., hereinafter referred to as "B1") were used.

The temperature of the compositions at the outlet of extruder was 250°C and the retention time in the extruder was 50 seconds.

Example 5, Comparative Example 3

The above A2 was used as Component A and Component B of polycarbonate resin (Panlite L1250 made by Teijin Kasei K.K., hereinafter referred to as "B2")

The temperature of the compositions at the outlet of extruder was 280°C and the retention time in the extruder was 50 seconds.

Examples 6 and 7, Comparative Example 4

The above A1 was used as Component A and Component B of polyethylene terephthalate resin (intrinsic viscosity measured in a 30°C phenol/tetrachloroethane 1:1 solution: 1.2 dl/g, hereinafter referred to as "B3")

The temperature of the compositions at the outlet of extruder was 295°C and the retention time in the extruder was 45 seconds.

The mold releasing properties of examples and comparative example were compared.

Example 8, Comparative Example 5

Experiments were carried out by using the above Al as Component A and the above B1 and B2 as Component B.

The temperature of the composition at the outlet of extruder was 280°C and the retention time in the extruder was 50 seconds.

Example 9, Comparative Example 6

Component A of acrylonitrile-ethylidenenorbornenestyrene copolymer (trademark: UCLAXS SK 30 made by Ube Industries, Ltd., hereinafter referred to as "A3") and Component B of the above B1 were used.

The temperature of the composition at the outlet of extruder was 250°C and the retention time in the extruder was 50 seconds.

Example 10, Comparative Example 7

Component A of acrylonitrile-styrene-specific acryl rubber [copolymer of triallylisocyanurate and n-butyl methacrylate] (trademark: Vitax V6100A made by Hitachi Kasei K.K., hereinafter referred to as "A4") and Component B of the above B1 were used.

The temperature of the composition at the outlet of extruder was 250°C and the retention time in the extruder was 50 seconds.

Example 11, Comparative Example 8

Component A of the above A4 and Component B of nylon 6 (trademark: Kanebo Nylon MC-112 made by Kanebo, Ltd., hereinafter referred to as "B4") were used.

The temperature of the composition at the outlet of extruder was 250°C and the retention time in the extruder was 50 seconds.

Table 1

| Composition | | | |
|---|---|---|---|
| Component | A (wt.%) | B (wt.%) | a (wphr) |
| Example 1<br>Example 2<br>Example 3<br>Comp.Ex. 1 | A1(100)<br>A1(100)<br>A1(100)<br>A1(100) | --<br>--<br>--<br>-- | a1 (0.3)<br>a3 (0.3)<br>a7 (0.1)<br>-- |
| Example 4<br>Comp.Ex. 2 | A2 (30)<br>A2 (30) | B1 (70)<br>B1 (70) | a1 (0.2), a2(0.3)<br>-- |
| Example 5<br>Comp.Ex. 3 | A2 (30)<br>A2 (30) | B2 (70)<br>B2 (70) | a1 (0.2), a4(0.3)<br>-- |
| Example 6<br>Example 7<br>Comp.Ex. 4 | A1 (30)<br>A1 (30)<br>A1 (30) | B3 (70)<br>B3 (70)<br>B3 (70) | a1(0.2), a5(0.3)<br>a1(0.2), a6(0.3)<br>-- |
| Example 8<br>Comp.Ex. 5 | A1 (20)<br>A1 (20) | B1(30), B2(50)<br>B1(30), B2(50) | a1(0.2), a4(0.3)<br>-- |
| Example 9<br>Comp.Ex. 6 | A3 (30)<br>A3 (30) | B1 (70)<br>B1 (70) | a1(0.3), a2(0.3)<br>-- |
| Example 10<br>Comp.Ex. 7 | A4 (30)<br>A4 (30) | B1 (70)<br>B1 (70) | a1(0.3), a2(0.3)<br>-- |
| Example 11<br>Comp.Ex. 8 | A4 (30)<br>A4 (30) | B4 (70)<br>B4 (70) | a1(0.3), a2(0.3)<br>-- |

Table 2

| Properties | | | | | | |
|---|---|---|---|---|---|---|
| Test Item<br>Unit | Tensile Yield<br>Strength (kg/cm$^2$) | Flexural Modulus<br>(kg/cm$^2$) | Izod Impact Strength with<br>a Notch (kg.cm/cm) | | Ratio of<br>Shrinkage | Mold Releasing<br>Property |
| | | | 23°C | -10°C | | |
| Example 1 | 320 | 18,500 | >66 | -- | 9/1000 | -- |
| Example 2 | 330 | 18,500 | 48.0 | -- | 9/1000 | -- |
| Example 3 | 330 | 18,500 | 41,0 | -- | 9/1000 | -- |
| Comp.Ex. 1 | 330 | 19,000 | 30.5 | -- | 6/1000 | -- |
| Example 4 | 480 | 22,000 | 18.2 | -- | 18/1000 | -- |
| Comp.Ex. 2 | 500 | 23,800 | 4.5 | -- | 15/1000 | -- |
| Example 5 | 445 | 25,000 | >66 | 38.4 | 13/1000 | -- |
| Comp.Ex. 3 | 460 | 24,800 | 45.0 | 14.3 | 8/1000 | -- |
| Example 6 | 485 | -- | -- | -- | -- | ○ |
| Example 7 | 480 | -- | -- | -- | -- | ○ |
| Comp.Ex. 4 | 505 | -- | -- | -- | -- | X |
| Example 8 | 455 | 22,300 | 55.0 | -- | 13/1000 | -- |
| Comp.Ex. 5 | 470 | 22,800 | 15.0 | -- | 8/1000 | -- |
| Example 9 | 445 | 20,500 | 15.6 | -- | 13/1000 | -- |
| Comp.Ex. 6 | 460 | 21,800 | 6.8 | -- | 8/1000 | -- |
| Example 10 | 445 | 21,900 | 15.6 | -- | 15/1000 | -- |
| Comp.Ex. 7 | 460 | 23,800 | 8.8 | -- | 8/1000 | -- |
| Example 11 | 690 | 25,000 | 19.0 | -- | 16/1000 | -- |
| Comp.Ex. 8 | 675 | 26,800 | 4.0 | -- | 9/1000 | -- |

## Claims

1. An ABS-type thermoplastic resin composition which is prepared by subjecting a thermoplastic resin containing a copolymer to dynamic heat treatment in the presence of a carbon radical inducing agent, said thermoplastic resin containing a copolymer being obtained by graft polymerizing a polymer containing one or more of diene monomers, multivinyl compounds and multiallyl compounds with at least one vinyl monomer selected from the group consisting of aromatic vinyl monomers, methacrylic ester monomers and vinyl cyanide monomers.

2. The ABS-type thermoplastic resin composition as claimed in Claim 1, wherein said ABS-type thermoplastic resin is at least one member selected from the group consisting of ABS resin (acrylonitrile-butadiene-styrene copolymer), AS resin (acrylonitrile-styrene copolymer), AAS resin (acrylonitrile-(triallylisocyanurate-n-butyl methacrylate)-styrene copolymer), MBS resin (methacrylic esterbutadiene-styrene copolymer), AES resin (acrylonitrileethylydenenorbornene-styrene copolymer), and ACS resin (acrylonitrile-chlorinated polyethylene-styrene copolymer).

3. The ABS-type thermoplastic resin composition as claimed in Claim 1, wherein one of said ABS-type thermoplastic resins is subjected to dynamic heat treatment in the presence of another thermoplastic resin.

4. The ABS-type thermoplastic resin composition as claimed in Claim 1 or 3, wherein said carbon radical inducing agent contains a charge transfer complex.

5. The ABS-type thermoplastic resin composition as claimed in Claim 1 or 3, wherein said carbon radical inducing agent contains a hydrogen donating compound.

11

6. The ABS-type thermoplastic resin composition as claimed in Claim 4, wherein said carbon radical inducing agent containing a charge transfer complex comprises a dihydroquinoline derivative or its polymer and a bismaleimide compound.

7. The ABS-type thermoplastic resin composition as claimed in Claim 1 or 3, wherein said carbon radical inducing agent containing a hydrogen donating compound has a hydrogen transfer quantity of 0.1 hydrogen atom/molecule-anthracene or more.

8. The ABS-type thermoplastic resin composition as claimed in Claim 1 or 3, wherein said carbon radical inducing agent containing a hydrogen donating compound comprises 9,10-dihydrophenanthlene, a bismaleimide compound and an anhydride of unsaturated carboxylic acid.

9. A method for producing an ABS-type thermoplastic resin composition which comprises the step of graft polymerizing a polymer containing one or more of diene monomers, multivinyl compounds and multiallyl compounds with at least one vinyl monomer selected from the group consisting of aromatic vinyl monomers, methacrylic ester monomers and vinyl cyanide monomers to obtain a thermoplastic resin containing a copolymer and subjecting the obtained thermoplastic resin containing copolymer to dynamic heat treatment in the presence of a carbon radical inducing agent.

10. The method for producing an ABS-type thermoplastic resin composition as claimed in Claim 9, wherein said ABS-type thermoplastic resin is at least one member selected from the group consisting of ABS resin (acrylonitrile-butadiene-styrene copolymer), AS resin (acrylonitrile-styrene copolymer), AAS resin (acrylonitrile-(triallyl-isocyanurate-n-butyl methacrylate)-styrene copolymer), MBS resin (methacrylic ester-butadiene-styrene copolymer), AES resin (acrylonitrile-ethylydenenorbornenestyrene copolymer), and ACS resin (acrylonitrile-chlorinated polyethylene-styrene copolymer).

11. The method for producing an ABS-type thermoplastic resin composition as claimed in Claim 9, wherein one of said ABS-type thermoplastic resins is subjected to dynamic heat treatment in the presence of another thermoplastic resin.

12. The method for producing an ABS-type thermoplastic resin composition as claimed in Claim 9, wherein said dynamic heat treatment is carried out at a melt kneading temperature in the range of 150 to 350°C and a heat treatment time in the range of 20 seconds to 20 minutes.

13. The method for producing an ABS-type thermoplastic resin composition as claimed in Claim 9, wherein said carbon radical inducing agent contains a charge transfer complex.

14. The method for producing an ABS-type thermoplastic resin composition as claimed in Claim 9, wherein said carbon radical inducing agent contains a hydrogen donating compound.

15. The method for producing an ABS-type thermoplastic resin composition as claimed in Claim 13, wherein said carbon radical inducing agent containing a charge transfer complex comprises a dihydroquinoline derivative or its polymer and a bismaleimide compound.

16. The method for producing an ABS-type thermoplastic resin composition as claimed in Claim 14, wherein said carbon radical inducing agent containing a hydrogen donating compound has a hydrogen transfer quantity of 0.1 hydrogen atom/molecule-anthracene or more.

17. The method for producing an ABS-type thermoplastic resin composition as claimed in Claim 14, wherein said carbon radical inducing agent containing a hydrogen donating compound comprises 9,10-dihydrophenanthlene, a bismaleimide compound and an anhydride of unsaturated carboxylic acid.